# EUROPÄISCHE PATENTSCHRIFT

(11) **EP 1 837 211 B1**
(45) Veröffentlichungstag und Bekanntmachung des Hinweises auf die Patenterteilung: **17.03.2010**
(21) Anmeldenummer: 07101459.1
(22) Anmeldetag: 31.01.2007
(51) Int. Cl.: B60G 11/27, F16F 9/05, F16F 9/38

(54) **Luftfedereinrichtung mit Radialdichtung**
Air spring device with radial seal
Dispositif à ressort à air doté d'un joint radial

(30) Priorität: 22.03.2006 DE 102006013174
(43) Veröffentlichungstag der Anmeldung: 26.09.2007
(73) Patentinhaber: Continental Aktiengesellschaft, 30165 Hannover (DE)
(72) Erfinder: Gleu, Jens-Uwe, 30855 Langenhagen (DE); Kind, Andreas, 31141 Hildesheim (DE); Wenger, Klaus, 31552 Apelern (DE)

(56) Entgegenhaltungen:
- EP-A1- 1 344 957
- EP-A2- 0 262 079
- DE-A1- 10 041 927
- US-B1- 6 328 144

## Beschreibung

Die Erfindung betrifft eine Luftfedereinrichtung für ein Fahrzeug, wobei die Luftfedereinrichtung zwischen Karosserie und Fahrwerk angeordnet ist. Die Luftfedereinrichtung weist als Bestandteile ein Deckelgehäuse auf, vorzugsweise zur karosserieseitigen Befestigung der Luftfedereinrichtung an das Fahrzeuges, einen Abrollkolben mit einer rotationssymmetrischen äußeren Abrollkontur, mindestens einen Rollbalg, der mit einem Ende am Deckelgehäuse und mit seinem anderen Ende unter Bildung einer Rollfalte am Abrollkolben befestigt ist, eine zylindrische und über die Abrollfalte hinausreichende Außenführung für den Rollbalg, sowie Anschlusseinrichtungen, mit denen der Abrollkolben mit dem Fahrzeug verbunden ist, vorzugsweise mit dem Fahrwerk. Die Luftfedereinrichtung weist mindestens einen mit Druckluft gefüllten Arbeitsraum, der mindestens teilweise von einem Rollbalg begrenzt / umschlossen wird, wobei der Rollbalg auf seiner Außen- und Unterseite durch eine ihn mindestens teilweise umgebende und mit der Außenführung und den Anschlusseinrichtungen verbundene, rotationssymmetrische und mindestens teilweise flexible Wand geschützt ist.

Üblicherweise werden solche mindestens teilweise flexiblen Wände als Faltenbälge ausgebildet, die sich mit dem Ein- und Ausfedern der Luftfedereinrichtung verkürzen oder verlängern können. Faltenbälge bieten einen recht guten Schutz gegen Verschmutzungen der empfindlichen Rollbälge, müssen aber relativ umständlich mit Außenführungen und Anschlusselementen verbunden werden. Dies geschieht meistens über Spannringe oder Klemmvorrichtungen. Die Anschlussbereiche der Faltenbälge sind somit mechanisch sehr beansprucht und können nach einer bestimmten Lastspielzahl spröde werden.

Die DE 100 41 927 A1 offenbart zur Lösung eines bei der Verwendung von Faltenbälgen entstehenden weiteren Problems, nämlich der Demontage eines Faltenbalges, den Faltenbalg mit besonders geformten Anschlussmanschetten zu versehen. Bei einer Luftfedereinrichtung mit zentrisch angeordnetem Schwingungsdämpfers, dessen Dämpfergehäuse als Anschlusseinrichtung für Verbindung mit dem Fahrwerk ausgebildet ist, muss zur Demontage und Montage nämlich der Faltenbalg über den gesamte Bereich der Anschlusseinrichtung geschoben werden, was insbesondere bei den oft auf dem Dämpfergehäuse aufsitzenden "Rucksackventilen" mit herkömmlichen Faltenbälgen nicht möglich ist.

Bei den heutigen Kraftfahrzeugen, insbesondere bei Personenkraftwagen, sind außengeführte Luftfedern durchweg mit so genannten "Hoch-Komfort" - Luftfederbälgen ausgestattet, die ein weiches Federungsverhalten aufweisen. Wenn solche Luftfederbälge verschmutzen, beispielsweise durch Sand, Steine oder andere während des Fahrbetriebes hoch geschleuderte Fremdkörper, wird die Funktion der Luftfeder stark beeinträchtigt, insbesondere wenn die Verschmutzungen im Bereich der Rollfalte entstehen. Dies kann bis zum Versagen der Luftfeder führen. Auch Eisbildung in den Bereichen der Abrollfalte kann hier Schädigungen hervorrufen.

Die EP 0 262 079 A2 offenbart eine Luftfeder mit einer Außenführung, die den Luftfederbalg stützt und gleichzeitig an ihrem unteren Ende auch mit einem ringförmigen Membran versehen ist, die am Kolben anliegt und den ringförmigen Raum zwischen Kolben und Außenführung gegen das Eindringen von Schmutz schützt. Die hier offenbarte Membran ist jedoch relativ kompakt aufgebaut.

Für die Erfindung bestand also die Aufgabe, ein Schutz- und Abdichtelement bereitzustellen, welches leicht montierbar ist, sicher vor Verschmutzungen schützt und gleichzeitig eingedrungene Fremdkörper, wie etwa Eisstücke, aus dem Gefahrenbereich entfernen kann, welches kostengünstig herzustellen ist und welches so flexibel ist, dass Montagen und Demontagen von Teilen einer Luftfedereinrichtung ohne weiteres möglich sind.

Gelöst wird diese Aufgabe durch die Merkmale des Hauptanspruchs. Weitere vorteilhafte Ausbildungen sind in den Unteransprüchen offenbart.

Dabei erstreckt sich die flexible Wand radial und senkrecht zur Achse der Luftfedereinrichtung und überdeckt den Ringspalt zwischen Außenführung und Anschlusseinrichtungen, wobei die flexible Wand nur an einer der den Ringspalt begrenzenden Einrichtungen befestigt ist und an der anderen lediglich federnd anliegt.

Eine solche flexible Abdichtung erlaubt eine sichere Abdichtung insbesondere der Rollfaltenbereiche des Luftfederbalges, ist leicht montierbar und wischt durch ihr einseitiges Gleiten Fremdkörper aus dem abzudichtenden Bereich. Eisstücke, die sich aufgrund feuchter Luft gebildet haben, werden so ebenfalls aus dem Gefahrenbereich entfernt.

Erfindungsgemäß ist die flexible Wand in Form einer oder mehrerer Ringbürsten mit radial und senkrecht zur Achse der Luftfedereinrichtung sich erstreckenden Borsten ausgebildet, die den Ringspalt zwischen Außenführung und Anschlusseinrichtungen überdecken. Eine solche Ringbürste ist sehr kostengünstig herzustellen und als Fertigteil sofort einsetzbar. Zudem ist eine Ringbürste so flexibel, dass Montagen und Demontagen von Teilen einer Luftfedereinrichtung ohne weiteres möglich sind. Die Durchlässigkeit der Bürsten gegen Luft und Flüssigkeiten ist hier besonders vorteilhaft, da Entlüftung, Entwässerung und Selbstreinigung von Eis und angetrockneten Schmutzresten funktionell integriert sind.

Eine weitere vorteilhafte Weiterbildung besteht darin, dass die Borsten der Ringbürsten an der Außenführung des Luftfederbalges befestigt sind, vorzugsweise am unteren Ende und an der Innenseite der Außenführung. Die Borstenspitzen berühren dabei die Anschlusseinrichtungen und liegen an letzterer an. Damit ergibt sich eine sichere Befestigung auf dem "großen" Umfang und damit eine hohe mechanische Belastbarkeit von Befestigung und Bürste auch bei kardanischen Relativbewegungen der Außenführung gegenüber den Anschlusseinrichtungen, d.h. gegenüber Kolbenstange oder Dämpfergehäuse.

Dies gilt gleichermaßen für eine weitere vorteilhafte Weiterbildung, die darin besteht, dass die Borsten mit einem Ende auf einem biegsamen/ flexiblen Träger aufgebracht sind, der an der Innenseite der Außenführung befestigt ist. Ein solcher flexibler Träger kann z. B. ein Kunststoffband sein, das auf einer Seite mit Borstenhaaren versehen und auf den Innenumfang der Außenführung geklebt ist.

Eine weitere vorteilhafte Weiterbildung im Hinblick auf eine sichere Verbindung zwischen Borsten/Haaren und Träger und im Hinblick auf einfache Kombination unterschiedlicher Materialien besteht darin, dass die Borsten auf einem Träger aus Kautschukmaterial vulkanisiert sind.

Eine weitere vorteilhafte Weiterbildung besteht darin, dass die Borsten über den Umfang der Bürste unterschiedlich lang ausgebildet sind. Hierdurch wird es möglich, die Bürstendichtung für beliebig geformte Spalte zu verwenden, beispielsweise für ovale Ringspalte für Sonderbauarten von Luftfederbeinen, etwa McPherson-Luftfederbeinen mit in Querrichtung verstärkten Dämpferwänden zur Aufnahme von Querkräften.

Eine weitere vorteilhafte Weiterbildung besteht darin, dass die Borsten aus Polyamidfasern mit einem Durchmesser von 0,05 bis 0,5 mm bestehen, vorzugsweise mit einem Durchmesser von 0,2 mm. Borsten oder "Haare" aus Polyamidfasern mit einem Durchmesser von 0,2 mm sind zum einen kostengünstige Handelsware und zum anderen bei üblichen Durchmessern eines Ringspaltes bei einer Luftfeder-Dämpfer-Einheit von etwa 79 mm Außendurchmesser und 51 mm Innendurchmesser ausreichend geeignet für die Dicht- und Reinigungsfunktion sogar auf Sandpisten.

Eine weitere vorteilhafte Weiterbildung besteht darin, dass die flexible Wand, die den Ringspalt zwischen Außenführung und Anschlusseinrichtungen überdeckt, aus einer Kombination von Ringbürsten und ringförmigen Gummimembranen besteht. Dadurch lassen sich Reinigungs- und Dichteigenschaften der flexiblen Wand beliebig einstellen und aufeinander anpassen. Selbstverständlich können die Eigenschaften der flexiblen Wand auch durch andere Kombinationen von Formen und Materialien auf ihre spezielle Aufgabe angepasst werden, zum Beispiel durch Bürsten mit Borsten unterschiedlicher Materialien (Polyamid und Kautschuk) im Verbund mit ringförmigen Abstreifern aus PU-Schaum-Kunststoff.

Eine weitere vorteilhafte Weiterbildung besteht darin, dass ein zentrisch angeordneter teleskopierbarer Dämpfer vorgesehen ist, wobei der Dämpfer im Wesentlichen aus einem innerhalb des Abrollkolben angeordneten und mit letzterem fest verbundenen Dämpfergehäuse sowie mit einem innen liegenden Dämpfungskolben und einer mit dem Dämpfungskolben und mit dem Deckelgehäuse verbundenen Kolbenstange besteht, wobei das Dämpfergehäuse als Anschlusseinrichtung dient. Damit lässt sich der Erfindungsgegenstand besonders gut für normale Luftfedern mit hydraulischem Dämpfer nutzen. Demontage und Montage sind enorm vereinfacht, insbesondere bei den oft auf dem Dämpfergehäuse aufsitzenden "Rucksackventilen", wie oben bereits angesprochen.

Besonders vorteilhaft lässt sich der Erfindungsgegenstand für eine als Luftfeder-Dämpfer-Einheit ausgebildet Luftfedereinheit nutzen, wobei die Luftfeder-Dämpfer-Einheit aus mindestens zwei mit Druckluft gefüllten Arbeitsräumen besteht, die jeweils mindesten teilweise durch bewegliche Wände in Form von außen geführten Rollbälgen begrenzt werden, wobei die Rollbälge mindestens teilweise auf den Konturen rotationssymmetrischer Körper abrollen (Abrollkonturen). Üblicherweise ist der oberste Rollbalg mit dem Deckelgehäuse verbunden. Die Arbeitsräume sind untereinander über durchströmbare Drosselventile verbunden und durch einen innerhalb eines Gehäuses axial beweglichen und am Kopfende einer Kolbenstange befindlichen rotationssymmetrischen Kolben getrennt. Die flexible Wand überdeckt den Ringspalt zwischen Außenführung und Kolbenstange, wobei die Kolbenstange als Anschlusseinrichtung dient. Solch eine Ausführung liegt dem Ausführungsbeispiel zu Grunde, dass die Erfindung näher erläutern soll. Es zeigen
- Fig. 1: eine Luftfeder- und Dämpfereinheit mit einer Ringbürste zwischen Kolbenstange und Außenführung
- Fig. 2: eine Ansicht und Draufsicht der Ringbürstenanordnung nach Fig. 1 in prinzipieller Form

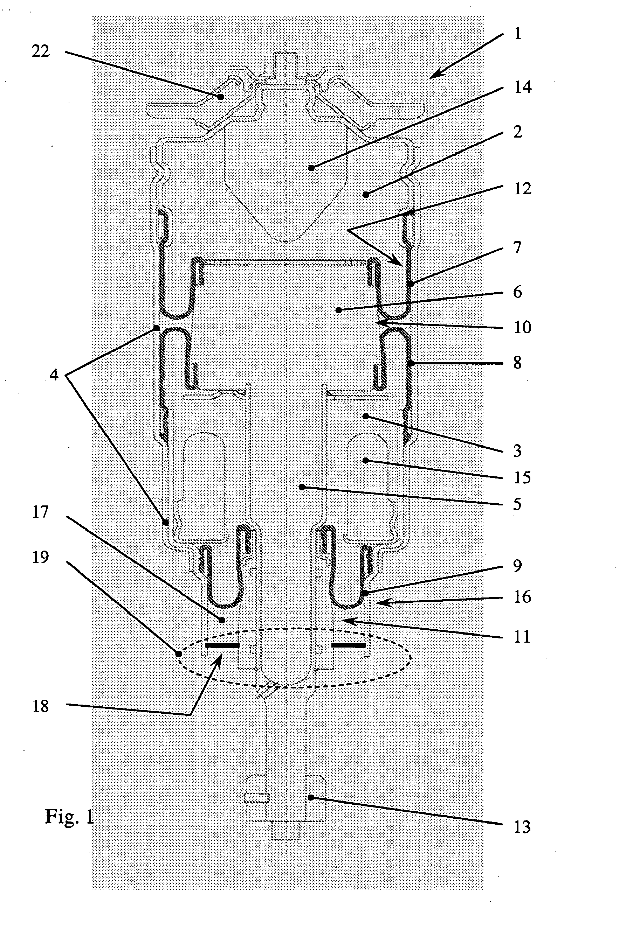

Die Fig. 1 zeigt eine Luftfeder- und Dämpfereinheit 1 für ein Fahrwerk eines luftgefederten Personenkraftwagens. Die Luftfeder- und Dämpfereinheit weist zwei mit Druckluft gefüllte Arbeitsräume 2 und 3 auf. Die Druckluft wird über einen hier nicht näher dargestellten Kompressor, über zugehörige Ventile und Leitungen in bekannter Weise in die Arbeitsräume gefördert und kann ebenfalls über dieses System abgelassen werden. Üblicherweise besteht ein Luftfeder- oder Niveauregelsystem aus Druckluftanlage / Druckluftversorgung und vier Luftfedermodulen, nämlich für jedes Rad eines, und wird insgesamt über eine Steuerungseinrichtung geregelt.

Die Arbeitsräume 2 und 3 sind in einem gemeinsamen topfförmigen, hier zylindrische ausgebildeten Gehäuse 4 angeordnet und durch einen am Kopfende einer Kolbenstange 5 befindlichen, rotationssymmetrisch ausgebildeten Kolben 6 getrennt. Der Kolben 6 ist innerhalb des zylindrischen Gehäuses 4 axial beweglich. Das Gehäuse 4 stellt die Außenführung für die Rollbälge 7 und 8 bereit. Innerhalb des Kolbens 6 sind hier nicht näher dargestellte steuerbare Drosselventile angeordnet, über die beiden Arbeitsräume 2 und 3 verbunden sind. Der Kolben 6 und die Kolbenstange 5 werden jeweils durch Rollbälge 7, 8 und 9 innerhalb des zylindrischen Gehäuses abgedichtet und geführt. Die Außenflächen 10 und 11 des Kolbens und der Kolbenstange sowie die Innenfläche 12 des Zylinders sind jeweils über einen für das Abrollen der Rollbälge erforderlichen Bereich als rotationssymmetrische Abrollkonturen ausgebildet. Der untere Anschlusspunkt 13 ist mit dem Fahrwerk verbunden.

Die Luftfeder- und Dämpfereinheit weist weiterhin federnd ausgebildete Anschläge 14 und 15 auf, die bei entsprechender Belastung in der Druck- oder in der Zugstufenendlage den Kolbenweg / Federweg begrenzen, damit kein metallischer Kontakt entsteht.

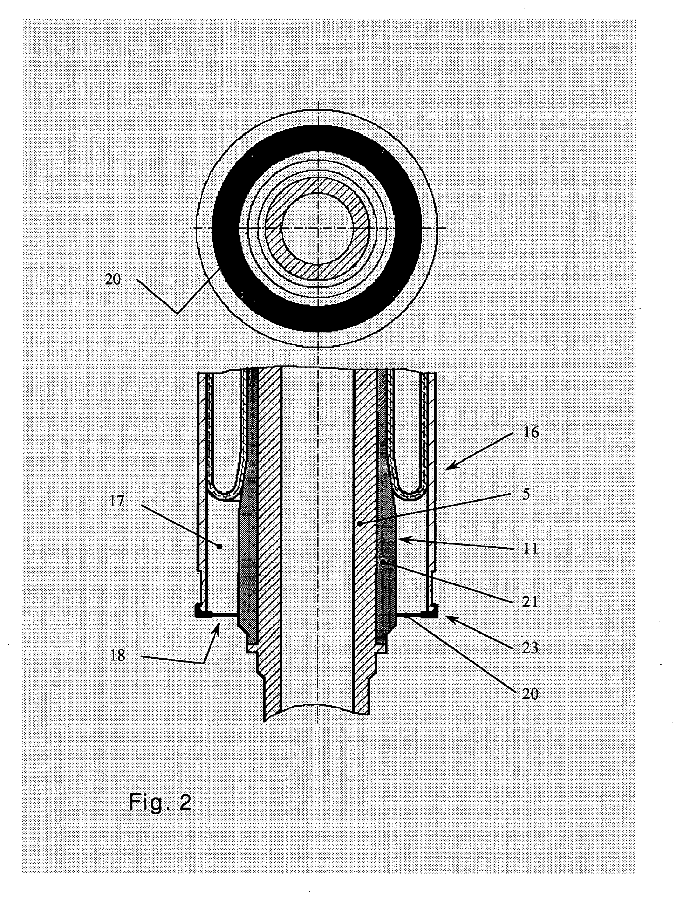

Das untere Ende des zylindrischen Gehäuses ist als Außenführung 16 für den unteren Luftfederbalg 9 ausgebildet. Der dabei entstehende Ringspalt 17 wird durch die Ringbürste 18 zum Schutz gegen Umgebungsbedingungen abgedichtet. Die Detailansicht 19 hierzu wird in prinzipieller Form in der Fig. 2 in näher dargestellt.

Die Abdichtung erfolgt durch radial und senkrecht zur Achse der Luftfeder- und Dämpfereinheit sich erstreckende Polyamid-Borsten 20, die den Ringspalt zwischen Außenführung und Anschlusseinrichtungen überdecken und im oberen Teil (Draufsicht) der Fig. 2 lediglich als schwarzer Ring, nicht jedoch als Einzelborsten dargestellt sind. Die einzelnen Borsten besitzen dabei einen Durchmesser von 0,18 mm.

Die Borsten 20 der Ringbürsten 18 sind an der Innenseite und am unteren Ende der Außenführung 16 des Luftfederbalges befestigt, die Spitzen der Borsten 20 berühren in federnder Anlage die Außenfläche 11 der mit einer Abrollhülse 21 versehenen und als Anschlusseinrichtung an das Fahrwerk dienenden Kolbenstange 5. Mit ihrem der gegenüberliegenden Deckelgehäuse 22 ist die Luftfeder-Dämpfereinrichtung mit der hier nicht näher dargestellten Fahrzeugkarosserie verbunden.

Die Borsten 20 sind mit ihrem äußeren Ende auf einem biegsamen/ flexiblen einem hier nicht näher dargestellten Träger 23 aus Kautschukmaterial vulkanisiert sind Bezugszeichenliste

### (Teil der Beschreibung)

- 1: Luftfeder- und Dämpfereinheit
- 2: Arbeitsraum (Dämpferraum)
- 3: Arbeitsraum (Federraum)
- 4: Zylindrisches Gehäuse
- 5: Kolbenstange
- 6: Kolben
- 7-9: Rollbalg / Luftfederbalg
- 10-12: Fläche mit Abrollkontur
- 13: Anschlusspunkt
- 14, 15: Federnder Anschlag
- 16: Außenführung
- 17: Ringspalt
- 18: Ringbürste
- 19: Detailansicht
- 20: Borsten / Bürstenhaare
- 21: Abrollhülse
- 22: Deckelgehäuse
- 23: Träger fürBorsten

## Patentansprüche

1. Luftfedereinrichtung (1) für ein Fahrzeug, wobei die Luftfedereinrichtung zwischen Karosserie und Fahrwerk angeordnet ist und folgende Bestandteile aufweist:
- ein Deckelgehäuse (22), vorzugsweise zur karosserieseitigen Befestigung der Luftfedereinrichtung an das Fahrzeuges,
- einen Abrollkolben (6) mit einer rotationssymmetrischen äußeren Abrollkontur,
- mindestens einen Rollbalg (7, 8), der mit einem Ende am Deckelgehäuse (22) und mit seinem anderen Ende unter Bildung einer Rollfalte am Abrollkolben (6) befestigt ist,
- eine zylindrische und über die Abrollfalte hinausreichende Außenführung (16) für den Rollbalg (7,8), sowie
- Anschlusseinrichtungen (13, 21), mit denen der Abrollkolben mit dem Fahrzeug verbunden ist, vorzugsweise mit dem Fahrwerk,
- mindestens einen mit Druckluft gefüllten Arbeitsraum (2, 3), der mindestens teilweise von dem Rollbalg (7, 8) begrenzt wird,
wobei der Rollbalg (7, 8) auf seiner Außen- und Unterseite durch eine ihn mindestens teilweise umgebende und mit der Außenführung (16) oder den Anschlusseinrichtungen (13, 21) verbundene, rotationssymmetrische und mindestens teilweise flexible Wand (18) geschützt ist, wobei die flexible Wand (18) sich radial und senkrecht zur Achse der Luftfedereinrichtung (1) erstreckt und den Ringspalt (17) zwischen Außenführung (16) und Anschlusseinrichtungen (13,21) überdeckt, wobei die flexible Wand (18) nur an einer der den Ringspalt (17) begrenzenden Einrichtung befestigt ist und an der anderen lediglich anliegt, **dadurch gekennzeichnet, dass** die flexible Wand (18) in Form einer oder mehrerer Ringbürsten mit radial und senkrecht zur Achse der Luftfedereinrichtung sich erstreckenden Borsten (20) ausgebildet ist, die den Ringspalt(17) zwischen Außenführung (16) und Anschlusseinrichtungen (13,21) überdecken.

2. Luftfedereinrichtung nach Anspruch 1, **dadurch gekennzeichnet, dass** die Borsten (20) der Ringbürsten (18) an der Außenführung (16) des Luftfederbalges befestigt (9) sind, vorzugsweise am unteren Ende der Außenführung (16), und die Anschlusseinrichtungen (13,21) (5) mit ihren Spitzen anliegend berühren.

3. Luftfedereinrichtung nach Anspruch 1 oder 2, **dadurch gekennzeichnet, dass** die Borsten (20) mit einem Ende auf einem biegsamen/ flexiblen Träger (23) aufgebracht sind, der an der Außenführung (16) befestigt ist.

4. Luftfedereinrichtung nach Anspruch 1 oder 2, **dadurch gekennzeichnet, dass** die Borsten (20) auf einem Träger (23) aus Kautschukmaterial vulkanisiert sind.

5. Luftfedereinrichtung nach Anspruch 1 bis 4, **dadurch gekennzeichnet, dass** die Borsten (20) über den Umfang der Ringbürste (18) unterschiedlich lang ausgebildet sind.

6. Luftfedereinrichtung nach Anspruch 1 bis 5, **dadurch gekennzeichnet, dass** die Borsten (20) aus Polyamidfasern mit einem Durchmesser von 0,05 bis 0,5 mm bestehen, vorzugsweise mit einem Durchmesser von 0,2 mm.

7. Lunfedereinrichtung nach Anspruch 1. bis 6, **dadurch gekennzeichnet, dass** die flexible Wand (18), die den Ringspalt (17) zwischen Außenführung (16) und Anschlusseinrichtungen (13,21) überdeckt, aus einer Kombination von Ringbürsten (18) und ringförmigen Gummimembranen besteht.

8. Luftfedereinrichtung nach Anspruch 1 bis 7, **dadurch gekennzeichnet, dass** ein zentrisch angeordneter teleskopierbarer Dämpfer vorgesehen ist, wobei der Dämpfer im Wesentlichen aus einem innerhalb des Abrollkolben (6) angeordneten und mit letzterem fest verbundenen Dämpfergehäuse sowie mit einem innen liegenden Dämpfungskolben und einer mit dem Dämpfungskolben und mit dem Deckelgehäuse (22) verbundenen Kolbenstange (5) besteht, wobei das Dämpfergehäuse als Anschlusseinrichtung (13,21) dient.

9. Luftfedereinrichtung nach Anspruch 1 bis 8, ausgebildet als Luftfeder-Dämpfer-Einheit (1) und bestehend aus mindestens zwei mit Druckluft gefüllten Arbeitsräumen (2, 3), die jeweils mindestens teilweise durch bewegliche Wände in Form von außen geführten Luftfederbälgen (7 - 9) begrenzt werden, wobei die Luftfederbälge mindestens teilweise auf den Konturen (10-12) rotationssymmetrischer Körper abrollen (Abrollkonturen), wobei die Arbeitsräume untereinander über durchströmbare Drosselventile verbunden und durch einen innerhalb eines Gehäuses axial beweglichen und am Kopfende einer Kolbenstange (5) befindlichen rotationssymmetrischen Kolben (6) getrennt sind, wobei die flexible Wand (18) den Ringspalt (17) zwischen Außenführung (16) und Kolbenstange (5) überdeckt und die Kolbenstange (5) als Anschlusseinrichtung dient.

## Claims

1. Air spring device (1) for a vehicle, with the air spring device being arranged between a body and a chassis and having the following components:
- a lid housing (22), preferably for the body-side fastening of the air spring device to the vehicle,
- a rolling piston (6) having a rotationally symmetrical outer rolling contour,
- at least one rolling bellows (7, 8) which is fastened with one end to the lid housing (22) and with its other end to the rolling piston (6) so as to form a roll fold,
- a cylindrical outer guide (16), which extends beyond the roll fold, for the rolling bellows (7, 8), and
- connecting devices (13, 21) by means of which the rolling piston is connected to the vehicle, preferably to the chassis,
- at least one working chamber (2, 3) which is filled with compressed air and which is delimited at least partially by the rolling bellows (7, 8), with the rolling bellows (7, 8) being protected, on its outer and lower side, by a rotationally symmetrical and at least partially flexible wall (18) which at least partially surrounds said rolling bellows (7, 8) and which is connected to the outer guide (16) or the connecting devices (13, 21), with the flexible wall (18) extending radially and perpendicularly with respect to the axis of the air spring device (1) and covering the annular gap (17) between the outer guide (16) and the connecting devices (13, 21), with the flexible wall (18) being fastened only to one device which delimits the annular gap (17) and merely bearing against the other, **characterized in that** the flexible wall (18) is formed in the manner of one or more annular brushes with bristles (20) which extend radially and perpendicularly with respect to the axis of the air spring device and which cover the annular gap (17) between the outer guide (16) and the connecting devices (13, 21).

2. Air spring device according to Claim 1, **characterized in that** the bristles (20) of the annular brushes (18) are fastened (9) to the outer guide (16) of the air spring bellows, preferably to the lower end of the outer guide (16), and bear with their tips against the connecting devices (13, 21).

3. Air spring device according to Claim 1 or 2, **characterized in that** the bristles (20) are attached with one end to a bendable/flexible support (23) which is fastened to the outer guide (16).

4. Air spring device according to Claim 1 or 2, **characterized in that** the bristles (20) are vulcanized onto a support (23) composed of rubber material.

5. Air spring device according to Claims 1 to 4, **characterized in that** the bristles (20) are of different lengths over the circumference of the annular brush (18).

6. Air spring device according to Claims 1 to 5, **characterized in that** the bristles (20) are composed of polyamide fibres with a diameter of 0.05 to 0.5 mm, preferably with a diameter of 0.2 mm.

7. Air spring device according to Claims 1 to 6, **characterized in that** the flexible wall (18) which covers the annular gap (17) between the outer guide (16) and connecting devices (13, 21) is composed of a combination of annular brushes (18) and annular rubber diaphragms.

8. Air spring device according to Claims 1 to 7, **characterized in that** a centrally arranged telescopic damper is provided, with the damper being composed substantially of a damper housing which is arranged within the rolling piston (6) and which is fixedly connected thereto and with the damper having situated within it a damping piston and a piston rod (5) which is connected to the damping piston and to the lid housing (22), with the damper housing serving as a connecting device (13, 21).

9. Air spring device according to Claims 1 to 8, designed as an air spring-damper unit (1) and composed of at least two working chambers (2, 3) which are filled with compressed air and which are each delimited at least partially by movable walls in the form of air spring bellows (7 - 9) which are guided at the outside, with the air spring bellows rolling at least partially on the contours (10 - 12) of rotationally symmetrical bodies (rolling contours), with the working chambers being connected to one another via throttle valves which can be traversed by flow and being separated by a rotationally symmetrical piston (6) which is axially movable within a housing and which is situated on the head end of a piston rod (5), with the flexible wall (18) covering the annular gap (17) between the outer guide (16) and piston rod (5) and with the piston rod (5) serving as a connecting device.

## Revendications

1. Dispositif à ressort à air (1) pour un véhicule, dans lequel le dispositif à ressort à air est disposé entre la carrosserie et le châssis et présente les constituants suivants :
- un boîtier de couvercle (22), de préférence pour la fixation du côté de la carrosserie du dispositif à ressort à air au véhicule,
- un piston déroulant (6) avec un contour de déroulement extérieur à symétrie de révolution,
- au moins un soufflet roulant (7, 8) qui est fixé par une extrémité au boîtier de couvercle (22) et par l'autre extrémité, en formant un pli de déroulement, au piston déroulant (6),
- un guide extérieur (16) cylindrique s'étendant au-delà du pli de déroulement pour le soufflet roulant (7, 8),
- et des dispositifs de raccordement (13, 21) avec lesquels le piston déroulant est connecté au véhicule, de préférence au châssis,
- au moins un espace de travail (2, 3) rempli d'air sous pression, qui est limité au moins en partie par le soufflet roulant (7, 8),
le soufflet roulant (7, 8) étant protégé sur son côté extérieur et son côté inférieur par une paroi (18) au moins partiellement flexible et à symétrie de révolution, l'entourant au moins partiellement et connectée au guide extérieur (16) ou aux dispositifs de raccordement (13, 21), la paroi flexible (18) s'étendant radialement et perpendiculairement à l'axe du dispositif à ressort à air (1) et recouvrant la fente annulaire (17) entre le guide extérieur (16) et les dispositifs de raccordement (13, 21), la paroi flexible (18) n'étant fixée qu'à l'un des dispositifs limitant la fente annulaire (17), et s'appliquant seulement contre l'autre, **caractérisé en ce que** la paroi flexible (18) est réalisée sous forme d'une ou plusieurs brosses annulaires avec des poils (20) s'étendant radialement et perpendiculairement à l'axe du dispositif à ressort à air, qui recouvrent la fente annulaire (17) entre le guide extérieur (16) et les dispositifs de raccordement (13, 21).

2. Dispositif à ressort à air selon la revendication 1, **caractérisé en ce que** les poils (20) des brosses annulaires (18) sont fixés sur le guide extérieur (16) du soufflet à ressort à air (9), de préférence à l'extrémité inférieure du guide extérieur (16) et viennent en contact en applique avec les dispositifs de raccordement (13, 21) avec leurs pointes.

3. Dispositif à ressort à air selon la revendication 1 ou 2, **caractérisé en ce que** les poils (20) sont appliqués par une extrémité sur un support fléchissant ou flexible (23), qui est fixé sur le guide extérieur (16).

4. Dispositif à ressort à air selon la revendication 1 ou 2, **caractérisé en ce que** les poils (20) sont vulcanisés sur un support (23) en matériau en caoutchouc.

5. Dispositif à ressort à air selon les revendications 1 à 4, **caractérisé en ce que** les poils (20) sont réalisés avec des longueurs différentes sur la périphérie de la brosse annulaire (18).

6. Dispositif à ressort à air selon les revendications 1 à 5, **caractérisé en ce que** les poils (20) se composent de fibres de polyamide ayant un diamètre de 0,05 à 0,5 mm, de préférence un diamètre de 0,2 mm.

7. Dispositif à ressort à air selon les revendications 1 à 6, **caractérisé en ce que** la paroi flexible (18), qui recouvre la fente annulaire (17) entre le guide extérieur (16) et les dispositifs de raccordement (13, 21), se compose d'une combinaison de brosses annulaires (18) et de membranes annulaires en caoutchouc.

8. Dispositif à ressort à air selon les revendications 1 à 7, **caractérisé en ce qu'**un amortisseur télescopable disposé centralement est prévu, l'amortisseur se composant essentiellement d'un boîtier d'amortisseur disposé à l'intérieur du piston déroulant (6) et connecté fixement à ce dernier ainsi que d'un piston d'amortissement situé à l'intérieur, et d'une tige de piston (5) connectée au piston d'amortissement et au boîtier de couvercle (22), le boîtier d'amortisseur servant de dispositif de raccordement (13, 21).

9. Dispositif à ressort à air selon les revendications 1 à 8, réalisé sous forme d'unité de ressort à air et d'amortisseur (1) et constitué d'au moins deux espaces de travail (2, 3) remplis d'air sous pression, qui sont limités à chaque fois au moins en partie par des parois mobiles sous forme de soufflets à ressort à air (7-9) guidés depuis l'extérieur, les soufflets à ressort à air roulant au moins en partie sur les contours (10-12) de corps à symétrie de révolution (contours de déroulement), les espaces de travail étant connectés les uns aux autres par le biais de soupapes d'étranglement pouvant être parcourues par un écoulement, et étant séparés par un piston (6) à symétrie de révolution mobile axialement à l'intérieur d'un boîtier et se trouvant à l'extrémité de tête d'une tige de piston (5), la paroi flexible (18) recouvrant la fente annulaire (17) entre le guide extérieur (16) et la tige de piston (5) et la tige de piston (5) servant de dispositif de raccordement.
